# FASCICULE DE BREVET EUROPEEN

(11) **EP 0 389 050 B1**
(45) Date de publication et mention de la délivrance du brevet: **28.12.1994**
(21) Numéro de dépôt: 90200639.4
(22) Date de dépôt: 19.03.1990
(51) Int. Cl.: H04N 7/133

(54) **Dispositif de codage de signaux vidéo numériques**
Vorrichtung zum Kodieren von digitalen Videosignalen
Digital video signals encoding device

(30) Priorité: 24.03.1989 FR 8903929
(43) Date de publication de la demande: 26.09.1990
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Lhuillier, Jean-Jacques, F-75007 Paris (FR); Guichard, Philippe, F-75007 Paris (FR)
(74) Mandataire: Landousy, Christian

(56) Documents cités:
- WO-A-84/02821
- WO-A-88/04508
- IEEE 1988 INTERNATIONAL CONFERENCE ON CONSUMER ELECTRONICS, DIGEST OF TECHNICAL PAPERS, Rosemont, Illinois, 8-10 juin 1988, pages 206-207, IEEE, New York, US;K. TANAKA et al.: "Advanced videotex terminal"
- INTERNATIONAL CONFERENCE ON COMMUNICATIONS, CONFERENCE RECORD, Denver, 14-18 juin 1981, vol. 2, pages 22.5.1-22.5.6, IEEE, New York, US; W.-H. CHEN: "Scene adaptive coder"
- IEEE INTERNATIONAL CONFERENCE ON COMMUNICATIONS, CONFERENCE RECORD; BOSTON; 19-22 juin 1983, vol.1, pages 458-462, IEEE, New York, US; S.C. KWATRA et al.: "NTSC composite video at 1.6 bits/pel"

## Description

La présente invention concerne un dispositif de codage de signaux vidéo numériques représentatifs de la luminance ou de la chrominance d'un certain nombre de points d'une image divisée en blocs, comprenant notamment un circuit de réduction de corrélation, un circuit de normalisation, un circuit de quantification, un circuit de codage, ainsi qu'un circuit de régulation de débit qui reçoit selon un débit variable les signaux de sortie du circuit de codage et délivre d'une part des signaux de régulation de débit renvoyés vers le circuit de normalisation, et d'autre part, sur la sortie du dispositif de codage, des signaux codés à un débit constant.

La numérisation des signaux de télévision, en vue de leur transmission ou de leur enregistrement, est une solution extrêmement utile dans le cas de liaisons où le bruit perturbateur est particulièrement important, les liaisons par satellite notamment. Une image de télévision contient cependant une très grande quantité d'informations, dont la représentation numérique se traduit par un débit élevé. En échantillonnant les composantes du signal de télévision à une fréquence satisfaisant la condition de Shannon et en opérant une quantification uniforme en 256 niveaux, la numérisation directe des composantes de luminance et de chrominance aux fréquences de 13,5 et de 6,75 mégahertz respectivement, imposées par les normes, conduirait en effet à un débit de 216Meb/s. Ce débit est tout à fait prohibitif, notamment dans le cas de dispositifs d'enregistrement magnétique grand public. L'emploi de techniques de réduction de débit est donc nécessaire, et d'autant plus réalisable qu'une redondance relativement importante existe dans l'image.

Un dispositif tel que mentionné dans le préambule ci-dessus est décrit dans la demande de brevet W088/04508. Dans ce dispositif, il est prévu d'assurer la normalisation en associant à chaque bloc d'image un facteur de classification de ce bloc dans une classe particulière selon un critère déterminé. Ce critère déterminé est unique et repose sur une classification des blocs selon le plus ou moins grand nombre de détails dont ils sont porteurs suivant l'une ou l'autre des dimensions spatiales de l'image. Le codage est ensuite ajusté en fonction de la classification ainsi opérée.

Le but de l'invention est de proposer un dispositif de codage d'images dans lequel il est prévu d'opérer selon plusieurs critères quantitatifs, c'est-à-dire en prenant en compte plusieurs paramètres liés de façon distincte aux signaux représentatifs des images, et de réaliser ainsi un classement des blocs d'image en familles distinctes selon les valeurs de ces paramètres.

A cet effet, l'invention concerne un dispositif caractérisé en ce que :
(I) ledit circuit de normalisation comprend des moyens de traitement non linéaire prévus pour recevoir d'une part lesdits blocs de signaux et lesdits signaux de régulation de débit et d'autre part des indications de classement desdits blocs en familles distinctes selon les valeurs de différents paramètres déterminés à partir de ces blocs par un circuit de classification, ledit circuit comprenant lui-même :
   (1) des moyens de calcul des paramètres suivants :
      (a) le nombre N_{c} des coefficients non nuls en sortie dudit circuit de réduction de corrélation ;
      (b) l'énergie moyenne hors composante continue eₘ associée aux signaux de sortie du circuit de réduction de corrélation ;
      (c) le pourcentage d'énergie basse fréquence e_{bf}, hors composante continue, associé à ces signaux ;
   (2) des moyens de comparaison et de décision destinés à comparer à des seuils les valeurs prises par lesdits paramètres pour chaque bloc d'image et à décider du classement des blocs d'image dans différentes familles selon lesdites valeurs de paramètres, selon le processus suivant comprenant les comparaisons suivantes :
      (A) comparaison (A) : l'énergie moyenne eₘ est comparée à un premier seuil S₁ (eₘ) :
         (a₁) si eₘ est supérieure à S₁(eₘ), on procède à une deuxième comparaison, celle du pourcentage e_{bf} à un deuxième seuil S₂(e_{bf}) :
            (a₁₁) si e_{fb} est supérieur à S₂(e_{fb}), le bloc d'image est classé dans une première famille C₁ ;
            (a₁₂) si e_{fb} est inférieur ou égal à S₂(e_{bf}), le bloc d'image est classé dans une deuxième famille C₂ ;
         (a₂) si eₘ est inférieure ou égale à S₁(eₘ) on procède à une troisième comparaison, celle du nombre de coefficients non nuls à un troisième seuil S₃(N_{c}), cette comparaison étant dénommée (B) ;
      (B) comparaison (B) : le nombre N_{c} est comparé au troisième seuil S₃(N_{c}) :
         (b₁) si N_{c} est inférieure à S₃(N_{c}), le bloc d'image est classé dans une troisième famille C₃ ;
         (b₂) si N_{c} est supérieur ou égal à S₃(N_{c}), on procède à une quatrième comparaison, celle du pourcentage e_{bf} au deuxième seuil S₂(e_{fb}) ;
            (b₂₁) si e_{fb} est supérieur à s₂(e_{fb}), le bloc d'image est classé dans une quatrième famille C₄ ;
            (b₂₂) si e_{fb} est inférieur ou égal à S₂(e_{fb}), on procède à une cinquième comparaison, celle du nombre N_{c} à un quatrième seuil S₄(N_{c}), cette comparaison étant dénommée (C) ;
      (C) comparaison (C) : le nombre N_{c} est comparé au quatrième seuil S₄(N_{c}) :
         (c₁) si N_{c} est supérieur à S₄(N_{c}), le bloc d'image est classé dans une cinquième famille C₅ ;
         (c₂) si N_{c} est inférieur à S₄(N_{c}), le bloc d'image est classé dans une sixième famille C₆ ;
(II) lesdits moyens de traitement non linéaire comprennent eux-mêmes, pour traiter lesdits blocs de signaux et lesdits signaux de régulation de débit en correspondance avec lesdites familles :
   (A) un premier circuit de traitement non linéaire des signaux de sortie du circuit de réduction de corrélation, destiné à éliminer ceux de ces signaux qui sont inférieurs à un seul S₅ déterminé, lié au rang et à la famille du bloc de signaux concerné ;
   (B) un multiplieur destiné à délivrer le proudit des signaux de régulation de débit par un indice de qualité i_{q} lié à la famille du bloc de signaux ;
   (C) un deuxième circuit de traitement non linéaire dudit produit, destiné à remplacer par une valeur fixe déterminée celles des valeurs dudit produit qui sont inférieures à un seuil S6 déterminé lié au rang du bloc de signaux ;
   (D) un troisième circuit de traitement non linéaire dudit produit, destiné à ajouter audit produit, lorsque sa valeur est inférieure à un seuil S₇ déterminé lié au rang et à la famille du bloc de signaux, une valeur de paramètre variable croissant au fur et à mesure que ladite valeur du produit est plus faible ;
   (E) un commutateur de sélection dela sortie de l'un ou l'autre desdits deuxième et troisième circuits de traitement non linéaire selon la famille du bloc de signaux ;
   (F) un diviseur de la sortie du premier circuit de traitement non linéaire par la sortie de ce commutateur, ledit diviseur étant destiné à délivrer lesdits signaux normalisés.

La classification ainsi proposée est nettement plus précise que celle mentionnée ci-dessus. En effet, les défauts d'image dûs au codage les plus couramment rencontrés, tels que effet de grillage, apparition de fonctions de base parasites, déformation de contours, sont liés à la nature des blocs d'image. En opérant une discrimination parmi ces blocs, il devient effectivement possible de traiter séparément les défauts d'image en déterminant pour chaque bloc d'image des paramètres distincts liés à ces défauts et en modifiant de façon spécifique ces paramètres de codage des blocs, dans des familles spécifiques de chacun de ces défauts.

Les particularités de l'invention apparaîtront maintenant de façon plus détaillée dans la description qui suit et dans les dessins annexés, donnés à titre d'exemples non limitatifs et dans lesquels :
- la figure 1 montre un exemple de réalisation du dispositif de codage selon l'invention ;
- la figure 2a montre une image divisée en N x M blocs, la figure 2b représente la matrice bidimensionnelle des coefficients de transformation d'un de ces blocs d'image, la figure 2c met en évidence un type de parcours monodimensionnel pour la lecture et le traitement de ces coefficients, la figure 2d montre un autre type de parcours pour un bloc de 32 points d'image, et la figure 2e montre par rapport à la figure 2c une variante de parcours dans laquelle les coefficients sont successivement lus dans différents blocs ;
- les figures 3a et 3b sont un schéma et un organigramme qui aident à comprendre le fonctionnement du circuit de la figure 3c, celle-ci montrant elle-même un exemple de réalisation du circuit de classification du dispositif de codage de la figure 1 ;
- la figure 4a est un exemple de réalisation du circuit de normalisation du dispositif de codage de la figure 1, et les figures 4b à 4d sont des courbes qui aident à comprendre le fonctionnement des trois circuits de traitement non linéaire de ce circuit de normalisation.

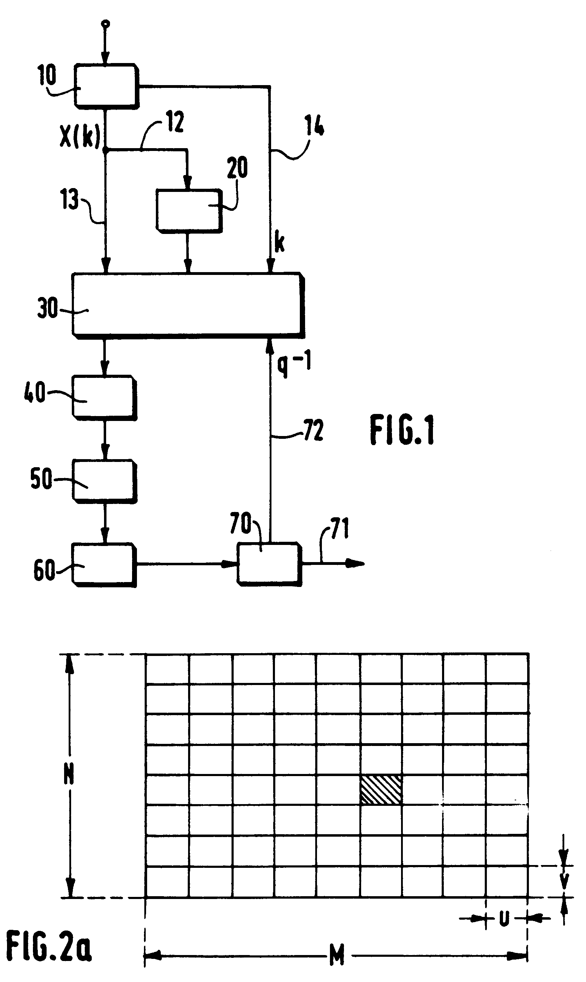

Dans l'exemple de réalisation représenté sur la figure 1, le dispositif de codage selon l'invention comprend d'abord un circuit de réduction de corrélation 10 par transformation orthogonale, par exemple un circuit de transformation en cosinus discret. Ce circuit 10 reçoit une suite de signaux numériques représentant, sous la forme d'une matrice de valeurs, la luminance ou la chrominance d'un certain nombre de points ou éléments d'une image divisée en blocs. Le circuit 10 délivre pour chaque bloc une suite bidimensionnelle de coefficients X(k), k étant le rang desdits coefficients lors de leur lecture. La figure 2a montre une telle image, divisée en M x N blocs. De tels circuits de transformation sont bien connus, notamment du brevet US-4394774, et l'expression des coefficients de transformation obtenus successivement pour chaque bloc ne sera donc pas donnée ici. On rappellera simplement que de nombreuses mesures statistiques ont permis de montrer la très forte corrélation entre points voisins d'une trame ou d'une image, et que l'objet de la transformation orthogonale est d'obtenir un ensemble de coefficients plus indépendants que les valeurs disponibles avant transformation.

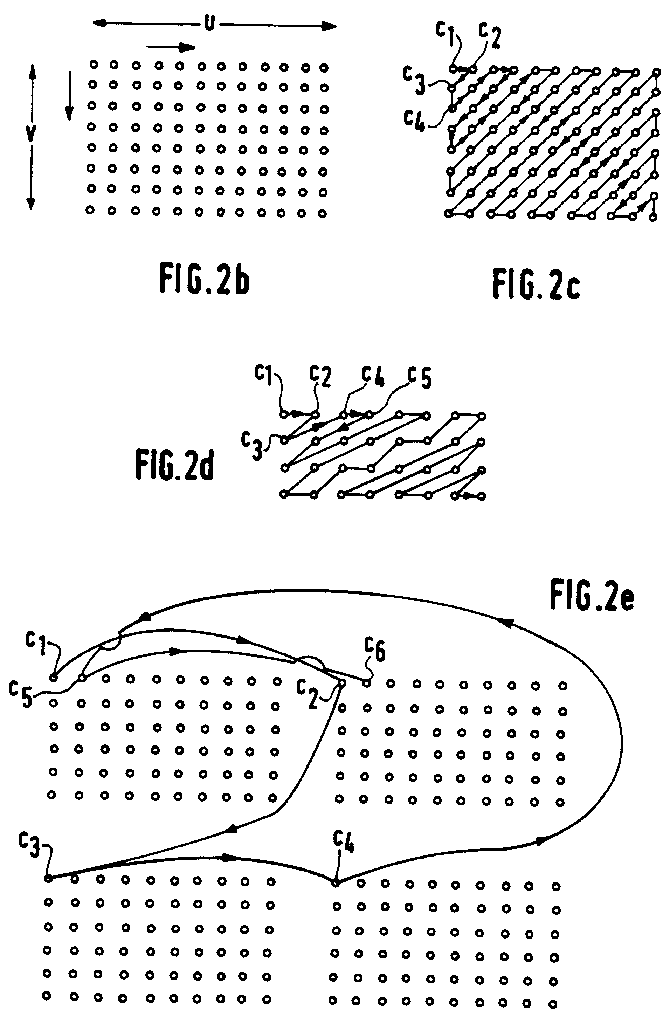

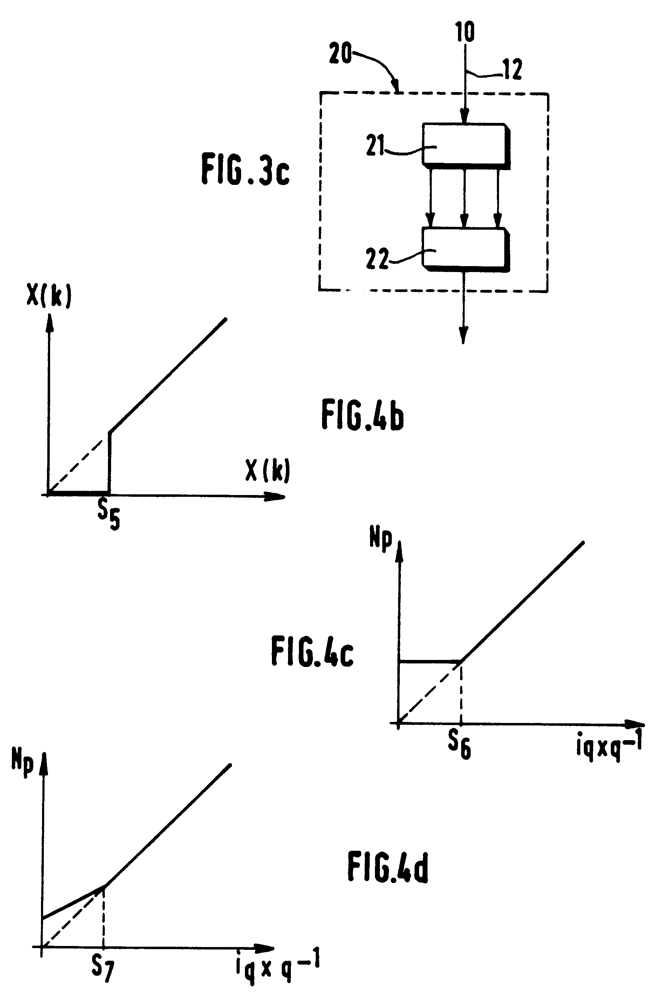

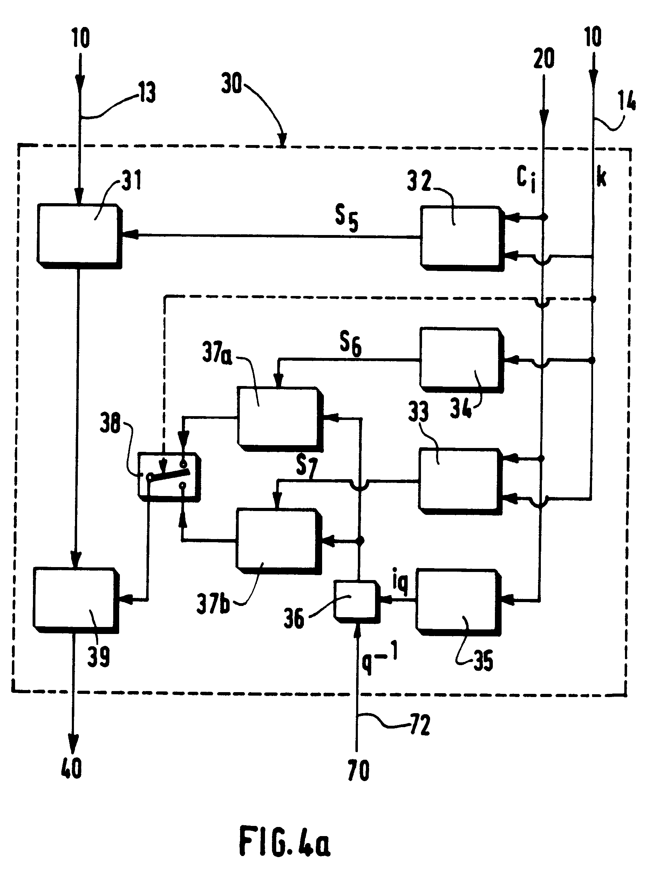

Les valeurs X(k) sont alors fournies d'une part à un circuit de classification 20 par l'intermédiaire d'une connexion 12 et d'autre part à un circuit de normalisation 30 par l'intermédiaire d'une connexion 13. Ces circuits 20 et 30 sont représentés sur les figures 3c et 4a respectivement et seront décrits en détail un peu plus loin. Le circuit de normalisation 30 est suivi d'un circuit de conversion de balayage 40 destiné à convertir la suite des coefficients X(k) normalisés en une suite monodimensionnelle. Pour un bloc tel que celui de la figure 2b, correspondant lui-même à celui indiqué avec des hachures sur la figure 2a, cette suite monodimensionnelle peut être par exemple une suite en zig-zag comme celle indiquée sur la figure 2c qui montre, dans une représentation de la matrice bidimensionnelle des coefficients de transformation du bloc d'image, un type de parcours définissant l'ordre de lecture (c₁, c₂, c₃, ...etc...) et de traitement de ces coefficients. Ce type de parcours présente l'avantage suivant, à savoir qu'il permet, après l'opération de quantification prévue plus loin, de disposer, avant codage, de longues plages de valeurs nulles, ce qui contribue à réduire la quantité d'informations à transmettre. Cette suite monodimensionnelle pourrait cependant être constituée sur la base d'un autre critère, par exemple selon le type de parcours représenté sur la figure 2d pour un bloc de u x v = 32 éléments d'images, ou être d'un autre type que les types de parcours représentés, par exemple être déterminée de façon adaptative en fonction de caractéristiques mesurées sur le signal lui-même. Il est également possible d'opérer une lecture des coefficients dans différents blocs, par exemple une lecture successive dans chacun des quatre blocs spatialement voisins de la figure 2e, en lisant les coefficients c₁ c₂, c₃, c₄ puis les coefficients c₅, c₆, etc... et ainsi de suite sur le type de parcours adopté.

Le circuit de conversion de balayage 40 est suivi d'un circuit de quantification 50. L'opération de quantification est destinée, on le sait, à convertir la valeur normalisée de chaque coefficient, exprimée avec une virgule flottante, en une valeur entière, soit par un simple arrondi, soit de préférence par troncature, en prenant la partie entière de la valeur avant quantification. Il est clair que, soumises à une telle quantification, un certain nombre de valeurs comprises entre 0 et 1 sont remplacées par la valeur 0, ce qui diminue le nombre de coefficients significatifs à transmettre et va donc dans le sens de la compression de données recherchée. Un tel circuit de quantification est connu et ne sera donc pas décrit davantage.

On rappellera simplement, comme on l'a vu plus haut, que la quantification peut être linéaire ou au contraire à pas variable. Dans le cas d'une quantification à pas variable, le circuit 50 réalise exactement l'opération décrite ci-dessus. Si au contraire la quantification est linéaire, la présence d'un circuit de compression dans le circuit 50 permet de reconstituer globalement une transformation à pas variable. Cette compression est justifiée par le fait que les informations visuelles essentielles d'une image correspondent aux fréquences spatiales les plus basses, correspondant elles-mêmes aux premiers coefficients de la matrice bidimensionnelle des coefficients de transformation.

Sans que la quantification soit nécessairement adaptative, il importe en outre de noter, comme on le précise plus loin, qu'un tel caractère adaptatif est avantageux. Il permet en effet de modifier le pas de quantification selon la nature plus ou moins uniforme de l'image, ou des blocs de l'image, et influe également sur le codage, une quantification plus rudimentaire entraînant l'utilisation de mots de code plus courts et donc une réduction du débit.

La sortie du circuit de quantification 50 est alors envoyée vers un circuit de codage 60, comprenant ici des tables de valeurs codées selon un code de Huffman, pour le codage soit de valeurs de coefficients (codage à longueur variable) soit de longueurs de plages (codage par plages). La sortie du circuit de codage 60 est enfin reliée à l'entrée d'un circuit de régulation de débit 70, qui reçoit selon un débit variable les valeurs ainsi codées et les restitue sur une première sortie 71 avec un débit constant. Cette sortie principale 71 constitue la sortie du dispositif de codage selon l'invention. Un signal de régulation de débit q⁻¹, ou facteur de qualité, est présent sur une deuxième sortie 72 du circuit 70. Cette deuxième sortie 72 relie le circuit de régulation de débit 70 au circuit de normalisation 30, afin de constituer la boucle de rétroaction qui permet effectivement la régulation de débit.

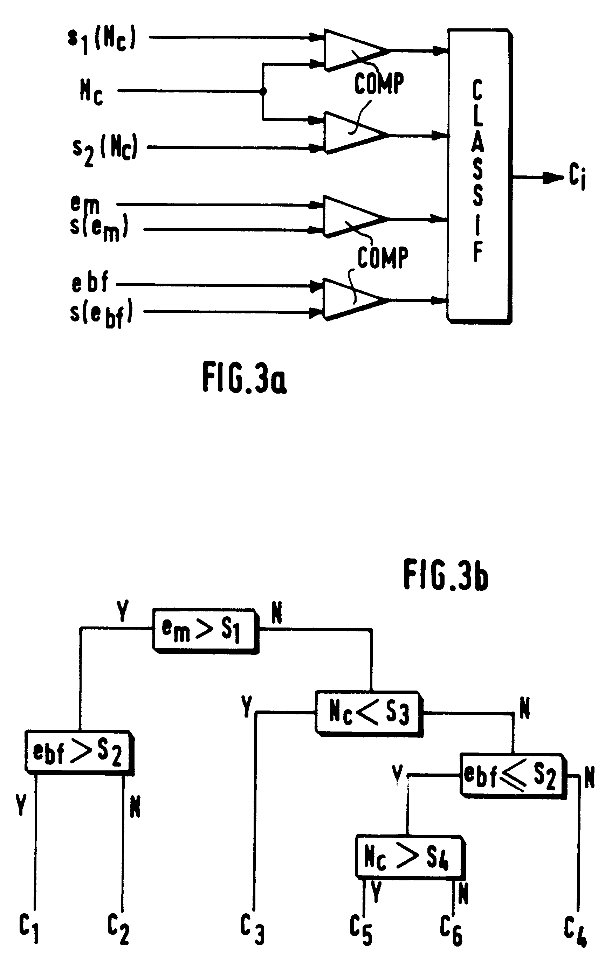

Les circuits 20 et 30 vont maintenant être décrits plus en détail. On précisera tout d'abord que le circuit de classification 20 opère selon le schéma de principe représenté sur la figure 3a, complété par l'organigramme de la figure 3b, et qu'il est réalisé par exemple comme indiqué sur la figure 3c.

Les paramètres de classification qui sont ici pris en compte par bloc sont les suivants :
(a) N_{c}, le nombre de coefficients non nuls dans chaque bloc, en sortie du circuit de transformation orthogonale 10 ;
(b) eₘ, l'énergie moyenne hors composante continue, cette énergie étant définie par la relation eₘ = (1/N_{c}).Σ(X(k))² avec k différent de 0 et X(k) représentant la suite des coefficients après ladite transformation orthogonale ;
(c) e_{bf}, le pourcentage d'énergie basse fréquence, égal par exemple, si l'on ne retient que 14 coefficients pour un bloc de 8 x 8 points d'image, à e_{bf} = Σ(X(i))²(i = 1 à 14)/Σ(X(i))²(=1 à 63), le premier coefficient étant systématiquement exclu d'un tel calcul puisqu'il représente la composante continue.

Comme l'indique la figure 3a, les paramètres ainsi définis sont alors comparés à des seuils dans des comparateurs COMP, et un classement, réalisé dans l'élément CLASSIF, est opéré selon les résultats des comparaisons effectuées. L'organigramme des comparaisons, représenté sur la figure 3b, peut être détaillé comme suit, les lettres Y et N indiquant respectivement (sur la figure 3b) les réponses OUI et NON au test mentionné :
(A) l'énergie moyenne eₘ est comparée à un premier seuil S₁(eₘ) :
   (a₁) si eₘ est supérieure à S₁(eₘ), on procède à une deuxième comparaison, celle du pourcentage e_{bf} à un deuxième seuil S₂(e_{bf}) :
      (a₁₁) si e_{bf} est supérieur à S₂(e_{bf}), le bloc d'image est classé dans une première famille C₁ ;
      (a₁₂) si e_{bf} est inférieur ou égal à S₂(e_{bf}), le bloc d'image est classé dans une deuxième famille C₂ ;
   (a₂) si eₘ est inférieure ou égale à S₁(eₘ), on procède à une troisième comparaison, celle du nombre de coefficients non nuls à un troisième seuil S₃(N_{c}), cette comparaison étant dénommée (B) ;
(B) le nombre N_{c} est comparé au troisième seuil S₃(N_{c}) :
   (b₁) si N_{c} est inférieur à S₃(N_{c}), le bloc d'image est classé dans une troisième famille C₃ ;
   (b₂) si N_{c} est supérieur ou égal à S₃(N_{c}), on procède à une quatrième comparaison, celle du pourcentage e_{bf} au deuxième seuil S₂(e_{bf}) (il est évident ici que, cette comparaison ayant déjà été effectuée ci-dessus en (a₁), on ne la réitère pas, mais on conserve simplement son résultat pour en déduire la conséquence appropriée au cours de cette phase (b₂)) :
      (b₂₁) si e_{bf} est supérieur à S₂(e_{bf}), le bloc d'image est classé dans une quatrième famille C₄, en fait ici équivalente à la famille C₂, dans l'exemple indiqué plus loin ;
      (b₂₂) si e_{bf} est inférieur ou égal à S₂(e_{bf}), on procède à une cinquième comparaison dénommée (C), celle du nombre N_{c} à un quatrième seuil S₄(N_{c}) ;
(C) le nombre N_{c} est comparé au quatrième seuil S₄(N_{c}) :
   (c₁) si N_{c} est supérieur à S₄(N_{c}), le bloc d'image est classé dans une cinquième famille C₅ ;
   (c₂) si N_{c} est inférieur ou égal à S₄(N_{c}), le bloc d'image est classé dans une sixième famille C₆.

Par l'intermédiaire des tests qui viennent d'être décrits, on obtient une discrimination des blocs d'image selon leur appartenance à l'une ou à l'autre des familles C₁ à C₆ et donc à des zones d'image distinctes correspondantes, en vue d'adapter le codage à cette classification. Les grandeurs N_{c}, eₘ, e_{bf} ont été choisies pour leur pouvoir discriminant. Les seuils S₁(eₘ), S₂(e_{bf}), S₃(N_{c}), S₄(N_{c}) ont été choisis de façon à déterminer sur un grand nombre de séquences le type du bloc : famille C₁ des blocs où les contours sont majoritaires, famille C₃ des blocs quasi-uniformes, famille C₅ des blocs à texture fine, famille C₆ des blocs à texture grossière, les familles C₂ et C₄ regroupant ici en une seule famille effective tous les blocs n'appartenant pas aux quatre autres. Dans l'exemple de réalisation ici décrit, on a retenu le jeu de valeurs de seuils suivant : S₁(eₘ) = 50, S₂(e_{bf}) = 0,7, S₃(N_{c}) = 30, et S₄(N_{c}) = 50.

Pour la mise en oeuvre de telles opérations, le circuit de classification 20 comprend, comme indiqué dans l'exemple de réalisation de la figure 3c, d'une part un circuit de calcul 21, qui reçoit les coefficients X(k) de sortie du circuit de transformation orthogonale 10 et délivre les trois paramètres N_{c}, eₘ, e_{bf}, et d'autre part un circuit de comparaison et de décision 22 qui reçoit ces trois paramètres et délivre l'information relative à la famille C₁ à C₆ à laquelle correspond le bloc courant, conformément à l'organigramme présenté sur la figure 3b.

Le circuit de normalisation 30 comprend, selon l'invention, d'une part des moyens de traitement non linéaire et d'autre part des moyens de normalisation déterminant à partir des signaux ainsi traités les signaux normalisés. Ces moyens de traitement non linéaire reçoivent les blocs et les signaux de régulation de débit, ainsi que les indications de classement de ces blocs fournies par le circuit de classification 20, et opèrent sur ces blocs et ces signaux de régulation de débit des traitements non linéaires en correspondance à ces indications.

Plus précisément, le circuit 30 comprend, dans l'exemple de réalisation de la figure 4a, un premier circuit 31 de traitement non linéaire des coefficients X(k). Ce circuit 31 reçoit d'une part les coefficients X(k) présents en sortie du circuit de transformation orthogonale 10 et d'autre part une valeur de seuil S₅ fournie par une mémoire 32. Cette mémoire 32 contient différentes valeurs de seuil à sélectionner selon le rang k du coefficient X(k) considéré et selon la famille du bloc d'image, le rang k étant également délivré (connexion 14) par le circuit 10 et la famille du bloc étant présente sur la connexion de sortie du circuit de comparaison et de décision 22 du circuit de classification 20, et donc égale à l'une des familles C₁ à C₆. La sortie du circuit 31 est soit le coefficient X(k) si celui-ci est supérieur ou égal au seuil, soit la valeur 0 si le coefficient est inférieur au seuil, comme indiqué sur la courbe de la figure 4b.

Le rang k et la famille Cᵢ du bloc d'image (i = 1 à 6) sont également, l'un et l'autre, fournis à une deuxième mémoire 33 située en parallèle sur la mémoire 32. Seul le rang k est fourni à une troisième mémoire 34, et seule la famille Cᵢ est fournie à une quatrième mémoire 35. Cette mémoire 35 délivre en fonction de la famille Cᵢ du bloc un indice de qualité i_{q} qui est multiplié dans un multiplieur 36 par le signal de régulation de débit q⁻¹ présent sur la connexion 72 de sortie du circuit de régulation de débit 70, et le produit i_{q} x q⁻¹ ainsi formé est fourni en parallèle à des deuxième et troisième circuits 37a et 37b de traitement non linéaire.

Le deuxième circuit de traitement non linéaire 37a reçoit d'une part ladite valeur i_{q} x q⁻¹ et d'autre part une valeur de seuil S₆ qui est fournie par la mémoire 34, et délivre un signal de sortie qui est soit une valeur proportionnelle à celle du produit i_{q} x q⁻¹ si cette valeur est supérieure ou égale au seuil S₆, soit la valeur 1 dans le cas contraire. Comme indiqué sur la figure 4c correspondante, cela signifie que la sortie du circuit 37a, c'est-à-dire la norme proposée par ce circuit, appelée Nₚ, est forcée à la valeur 1 jusqu'à des valeurs de qualité relativement faibles, ou, ce qui est équivalent, jusqu'à des valeurs de q⁻¹ relativement élevées.

Le troisième circuit de traitement non linéaire 37b reçoit d'une part également ladite valeur i_{q} x q⁻¹ et d'autre part une valeur de seuil S₇ qui est fournie par la mémoire 33, et délivre un signal de sortie qui, selon le même principe que précédemment, est soit la valeur du produit i_{q} x q⁻¹ si cette valeur est supérieure au seuil S₇, soit, dans le cas contraire, cette valeur augmentée d'un paramètre variable croissant au fur et à mesure que la qualité augmente, c'est-à-dire que q⁻¹ est plus petit (voir la figure 4d correspondante, sur laquelle on peut en effet constater que l'effet de la norme proposée Nₚ en sortie du circuit 37b est différent de part et d'autre du seuil S₇, la variation du pas de quantification étant plus rapide au-dessus du seuil).

Les différents paramètres associés aux caractéristiques non linéaires des figures 4b à 4d ont été déterminés statistiquement. par exemple, S₅(k,Cᵢ) a été calculé en analysant l'histogramme des valeurs prises par les coefficients de rang k des blocs de la famille Cᵢ. Le seuil S₇(k, Cᵢ) est, lui, égal à la moyenne des coefficients de rang k appartenant à la famille Cᵢ, et le seuil S₆(k) a été choisi de façon empirique.

Les sorties des deuxième et troisième circuits de traitement non linéaire 37a et 37b constituent les deux signaux d'entrée d'un commutateur 38 qui sélectionne l'un ou l'autre comme norme, selon la famille Cᵢ qui correspond au bloc considéré et qui est fournie par le circuit de classification 20. La norme, présente en sortie du commutateur 38, est envoyée vers la deuxième entrée d'un diviseur 39 dont la première reçoit les coefficients X(k) de sortie du circuit de transformation orthogonale 10. Le diviseur 39 délivre alors les valeurs de coefficient normalisées qui sont fournies, en une suite monodimensionnelle, au circuit de conversion de balayage 40.

## Revendications

1. Dispositif de codage de signaux vidéo numériques représentatifs de la luminance ou de la chrominance d'un certain nombre de points d'une image divisée en blocs, comprenant notamment un circuit de réduction de corrélation, un circuit de normalisation, un circuit de quantification, un circuit de codage, ainsi qu'un circuit de régulation de débit qui reçoit selon un débit variable les signaux de sortie du circuit de codage et délivre d'une part des signaux de régulation de débit renvoyés vers le circuit de normalisation, et d'autre part, sur la sortie du dispositif de codage, des signaux codés à un débit constant, caractérisé en ce que :
(I) ledit circuit de normalisation comprend des moyens de traitement non linéaire (31, 32, 33, 34, 35, 36, 37a, 37b) prévus pour recevoir d'une part lesdits blocs de signaux et lesdits signaux de régulation de débit et d'autre part des indications de classement desdits blocs en familles distinctes selon les valeurs de différents paramètres déterminés à partir de ces blocs par un circuit de classification (20), ledit circuit comprenant lui-même :
(1) des moyens (21) de calcul des paramètres suivants :
(a) le nombre N_{c} des coefficients non nuls en sortie dudit circuit de réduction de corrélation ;
(b) l'énergie moyenne hors composante continue eₘ associée aux signaux de sortie du circuit de réduction de corrélation ;
(c) le pourcentage d'énergie basse fréquence e_{bf}, hors composante continue, associé à ces signaux ;
(2) des moyens (22) de comparaison et de décision destinés à comparer à des seuils les valeurs prises par lesdits paramètres pour chaque bloc d'image et à décider du classement des blocs d'image dans différentes familles selon lesdites valeurs de paramètres, selon le processus suivant comprenant les comparaisons suivantes :
(A) comparaison (A) : l'énergie moyenne eₘ est comparée à un premier seuil S₁ (eₘ) :
(a₁) si eₘ est supérieure à S₁(eₘ), on procède à une deuxième comparaison, celle du pourcentage e_{bf} à un deuxième seuil S₂(e_{bf}) :
(a₁₁) si e_{fb} est supérieur à S₂(e_{fb}), le bloc d'image est classé dans une première famille C₁ ;
(a₁₂) si e_{fb} est inférieur ou égal à S₂(e_{bf}), le bloc d'image est classé dans une deuxième famille C₂ ;
(a₂) si eₘ est inférieure ou égale à S₁(eₘ) on procède à une troisième comparaison, celle du nombre de coefficients non nuls à un troisième seuil S₃(N_{c}), cette comparaison étant dénommée (B) ;
(B) comparaison (B) : le nombre N_{c} est comparé au troisième seuil S₃(N_{c}) :
(b₁) si N_{c} est inférieure à S₃(N_{c}), le bloc d'image est classé dans une troisième famille C₃ ;
(b₂) si N_{c} est supérieur ou égal à S₃(N_{c}), on procède à une quatrième comparaison, celle du pourcentage e_{bf} au deuxième seuil S₂(e_{fb}) ;
(b₂₁) si e_{fb} est supérieur à s₂(e_{fb}), le bloc d'image est classé dans une quatrième famille C₄ ;
(b₂₂) si e_{fb} est inférieur ou égal à S₂(e_{fb}), on procède à une cinquième comparaison, celle du nombre N_{c} à un quatrième seuil S₄(N_{c}), cette comparaison étant dénommée (C) ;
(C) comparaison (C) : le nombre N_{c} est comparé au quatrième seuil S₄(N_{c}) :
(c₁) si N_{c} est supérieur à S₄(N_{c}), le bloc d'image est classé dans une cinquième famille C₅ ;
(c₂) si N_{c} est inférieur à S₄(N_{c}), le bloc d'image est classé dans une sixième famille C₆ ;
(II) lesdits moyens de traitement non linéaire comprennent eux-mêmes, pour traiter lesdits blocs de signaux et lesdits signaux de régulation de débit en correspondance avec lesdites familles :
(A) un premier circuit (31) de traitement non linéaire des signaux de sortie du circuit de réduction de corrélation, destiné à éliminer ceux de ces signaux qui sont inférieurs à un seul S₅ déterminé, lié au rang et à la famille du bloc de signaux concerné ;
(B) un multiplieur (36) destiné à délivrer le proudit des signaux de régulation de débit par un indice de qualité i_{q} lié à la famille du bloc de signaux ;
(C) un deuxième circuit (37a) de traitement non linéaire dudit produit, destiné à remplacer par une valeur fixe déterminée celles des valeurs dudit produit qui sont inférieures à un seuil S6 déterminé lié au rang du bloc de signaux ;
(D) un troisième circuit (37b) de traitement non linéaire dudit produit, destiné à ajouter audit produit, lorsque sa valeur est inférieure à un seuil S₇ déterminé lié au rang et à la famille du bloc de signaux, une valeur de paramètre variable croissant au fur et à mesure que ladite valeur du produit est plus faible ;
(E) un commutateur (38) de sélection dela sortie de l'un ou l'autre desdits deuxième et troisième circuits de traitement non linéaire selon la famille du bloc de signaux ;
(F) un diviseur (39) de la sortie du premier circuit de traitement non linéaire par la sortie de ce commutateur, ledit diviseur étant destiné à délivrer lesdits signaux normalisés.

2. Dispositif selon la revendication 1, caractérisé en ce que lesdits premier, deuxième et troisième circuits de traitement non linéaire (31, 37a, 37b) et le multiplieur (36) sont commandés par des mémoires recevant elles-mêmes le rang et/ou la famille du bloc de signaux concerné.

## Patentansprüche

1. Vorrichtung zum Kodieren von digitalen Videosignalen, die für die Luminanz oder Chrominanz einer bestimmten Anzahl von Punkten eines in Blöcke unterteilten Bilds repräsentativ sind, welche insbesondere eine Korrelationsreduzierschaltung, eine Normierungsschaltung, eine Quantisierungsschaltung, eine Kodierschaltung sowie eine Durchsatzregelungsschaltung, die die Ausgangssignale der Kodierschaltung mit einem variablen Durchsatz empfängt und einerseits Durchsatzregelsignale, die an die Normierungsschaltung zurückgesandt werden, und andererseits an den Ausgang der Kodiervorrichtung kodierte Signale mit konstantem Durchsatz ausgibt, dadurch gekennzeichnet, daß:
(I) die Normierungsschaltung Mittel zur nichtlinearen Verarbeitung (31, 32, 33, 34, 35, 36, 37a, 37b) umfaßt, um einerseits die Signalblöcke und die Durchsatzregelsignale und andererseits Angaben der Einstufung der Blöcke in verschiedene Gruppen je nach den Werten der verschiedenen, anhand dieser Blöcke bestimmten Parameter durch eine Klassifizierungsschaltung (20) zu empfangen, wobei die Schaltung selbst folgendes umfaßt:
(1) Mittel (21) zum Berechnen folgender Parameter:
(a) Zahl N_{c} der Koeffizienten ungleich Null am Ausgang der Korrelationsreduzierschaltung;
(b) mittlere Energie ohne Gleichstromkomponente eₘ, die mit den Ausgangssignalen der Korrelationsreduzierschaltung verbunden ist;
(c) Prozentsatz der niederfrequenten Energie e_{bf} ohne Gleichstromkomponente, die mit diesen Signalen verbunden ist;
(2) Mittel (22) zum Vergleichen und Entscheiden, die zum Vergleichen der von den Parametern angenommenen Werte mit den Schwellenwerten für jeden Bildblock und zum Entscheiden über die Einstufung der Bildblöcke in verschiedene Gruppen entsprechend den Werten der Parameter nach folgendem Verfahren, das folgende Vergleiche umfaßt, bestimmt sind:
(A) Vergleich (A): die mittlere Energie eₘ wird mit einem ersten Schwellenwert S₁(eₘ) verglichen:
(a₁) Ist eₘ größer als S₁(eₘ), wird ein zweiter Vergleich, und zwar des Prozentsatzes e_{bf}, mit einem zweiten Schwellenwert S₂(e_{bf}) durchgeführt:
(a₁₁) Ist e_{bf} größer als S₂(e_{bf}), wird der Bildblock in eine erste Gruppe C₁ eingestuft;
(a₁₂) Ist e_{bf} kleiner als oder gleich S₂(e_{bf}), wird der Bildblock in eine zweite Gruppe C₂ eingestuft;
(a₂) Ist eₘ kleiner als oder gleich S₁(eₘ), wird ein dritter Vergleich, und zwar der Zahl der Koeffizienten ungleich Null, mit einem dritten Schwellenwert S₃(N_{c}) durchgeführt, der mit (B) bezeichnet wird;
(B) Vergleich (B): die Zahl N_{c} wird mit dem dritten Schwellenwert S₃(N_{c}) verglichen:
(b₁) Ist N_{c} kleiner als S₃(N_{c}), wird der Bildblock in eine dritte Gruppe C₃ eingestuft;
(b₂) Ist N_{c} größer als oder gleich S₃(N_{c}), wird ein vierter Vergleich, und zwar des Prozentsatzes e_{bf}, mit einem zweiten Schwellenwert S₂(e_{bf}) durchgeführt;
(b₂₁) Ist e_{bf} größer als S₂(e_{bf}), wird der Bildblock in eine vierte Gruppe C₄ eingestuft;
(b₂₂) Ist e_{bf} kleiner als oder gleich S₂(e_{bf}), wird ein fünfter Vergleich, und zwar der Zahl N_{c} mit einem vierten Schwellenwert S₄(N_{c}) durchgeführt, der mit (C) bezeichnet wird;
(C) Vergleich (C): die Zahl N_{c} wird mit dem vierten Schwellenwert S₄(N_{c}) verglichen:
(c₁) Ist N_{c} größer als S₄(N_{c}), wird der Bildblock in eine fünfte Gruppe C₅ eingestuft;
(c₂) Ist N_{c} kleiner als S₄(N_{c}), wird der Bildblock in eine sechste Gruppe C₆ eingestuft;
(II) die Mittel zur nichtlinearen Verarbeitung selbst folgendes umfassen, um die Signalblöcke und die Durchsatzregelsignale entsprechend den Gruppen zu verarbeiten:
(A) eine erste Schaltung (31) zur nichtlinearen Verarbeitung der Ausgangssignale der Korrelationsreduzierschaltung, mit der diejenigen Signale unterdrückt werden sollen, die kleiner sind als ein festgelegter, an den Rang und die Gruppe des betreffenden Signalblocks gekoppelter Schwellenwert S₅;
(B) einen Mulitplizierer (36), der das Produkt aus den Durchsatzregelsignalen und einem an die Gruppe des Signalblocks gekoppelten Güteindex i_{q} bilden soll;
(C) eine zweite Schaltung (37a) zur nichtlinearen Verarbeitung des Produkts, die diejenigen Werte des Produkts, die kleiner sind als ein festgelegter, an den Rang des Signalblocks gekoppelter Schwellenwert S₆, durch einen festgelegten festen Wert ersetzen soll;
(D) eine dritte Schaltung (37b) zur nichtlinearen Verarbeitung des Produkts, die diesem Produkt, wenn sein Wert kleiner ist als ein festgelegter, an den Rang und die Gruppe des Signalblocks gekoppelter Schwellenwert S₇, einen Wert mit variablem Parameter hinzufügen soll, der in dem Maße steigt, wie der Wert des Produkts niedriger ist;
(E) einen Wahlschalter (38) zum Wählen des Ausgangs der zweiten oder dritten Schaltung zur nichtlinearen Verarbeitung je nach Gruppe des Signalblocks;
(F) einen Dividierer (39) zum Dividieren des Ausgangssignals der ersten Schaltung zur nichtlinearen Verarbeitung durch den Ausgangs dieses Schalters, wobei dieser Dividierer die normierten Signale liefern soll.

2. Vorrichtung nach Anspruch 1, dadurch gekennzeichnet, daß die ersten, zweite und dritte Schaltung zur nichtlinearen Verarbeitung (31, 37a, 37b) und der Multiplizierer (36) von Speichern gesteuert werden, in die der Rang und/oder die Gruppe des betreffenden Signalblocks geladen werden.

## Claims

1. A device for encoding digital video signals which are representative of the luminance or the chrominance of a given number of pixels of a picture divided into blocks, comprising particularly a correlation reduction circuit, a normalization circuit, a quantization circuit, an encoding circuit as well as a rate control circuit which receives the output signals from the encoding circuit in accordance with a variable rate and supplies on the one hand rate control signals applied to the normalization circuit and on the other hand encoded signals at a constant rate at the output of the encoding device, characterized in that
(I) said normalization circuit comprises means for non-linear treatment (31, 32, 33, 34, 35, 36, 37a, 37b) for receiving said blocks of signals and said rate control signals on the one hand and on the other hand indications of the classification of said blocks into distinct families in accordance with the values of different parameters determined from these blocks by a classification circuit (20), said classification circuit also comprising:
(1) means (21) for calculating the following parameters:
(a) the number N_{c} of the non-zero coefficients at the output of said correlation reduction circuit;
(b) the average energy without a d.c. component eₘ associated with the output signals of the correlation reduction circuit;
(c) the low-frequency energy percentage e_{bf} without a d.c. component associated with these signals;
(2) comparison (22) and decision means for comparing with thresholds the values taken by said parameters for each picture block and for deciding the classification of the picture blocks in different families in accordance with said parameter values in accordance with the following process comprising the following comparisons:
(A) comparison (A): the average energy eₘ is compared with a first threshold S₁(eₘ):
(a₁) if eₘ is higher than S₁(eₘ), a second comparison of the percentage e_{bf} with a second threshold S₂(e_{bf}) is carried out;
(a₁₁) if e_{fb} is higher than S₂(e_{fb}), the picture block is classified in a first family C₁;
(a₁₂) if e_{fb} is less than or equal to S₂(e_{bf}), the picture block is classified in a second family C₂;
(a₂) if eₘ is less than or equal to S₁(eₘ), a third comparison of the number of non-zero coefficients with a third threshold S₃(N_{C}) is carried out, which comparison is designated (B);
(B) comparison (B): the number N_{c} is compared with the third threshold S₃(N_{C}):
(b₁) if N_{C} is less than S₃(N_{c}), the picture block is classified in a third family C₃;
(b₂) if N_{c} is higher than or equal to S₃(N_{c}), a fourth comparison of the percentage e_{bf} with the second threshold S₂(e_{fb}) is carried out;
(b₂₁) if e_{fb} is higher than S₂(e_{fb}), the picture block is classified in a fourth family C₄;
(b₂₂) if e_{fb} is less than or equal to S₂(E_{fb}) a fifth comparison of the number N_{c} with a fourth threshold S₄(N_{c}) is carried out, which comparison is designated (C);
(C) comparison (C): the number N_{c} is compared with the fourth threshold S₄(N_{c}):
(c₁) if N_{c} is higher than S₄(N_{c}), the picture block is classified in a fifth family C₅;
(c₂) is N_{c} is less than or equal to S₄(N_{c}), the picture block is classified in a sixth family C₆;
(II) said means for non-linear treatment comprising, for treating said signal blocks and said rate control signals in conformity with said families:
(A) a first circuit for non-linear treatment of the output signals of the correlation reduction circuit intended to eliminate those signals which are smaller than a given threshold S₅ which is related to the row and with the family of the block of signals concerned;
(B) a multiplier (36) intended to supply the product of the rate control signals by means of a quality indication i_{q} related to the family of the block of signals;
(C) a second circuit (37a) for non-linear treatment of said product intended to substitute a given fixed value for those product values which are smaller than a given threshold S₆ which is related to the row of the block of signals;
(D) a third circuit (37b) for non-linear treatment of said product intended to add to said product a variable parameter value increasing as said product value is smaller, when its value is smaller than a given threshold S₇ which is related to the row and the family of the block of signals;
(E) a switch (38) for selecting the output signal of the one or the other of said second and third circuits for non-linear treatment in accordance with the family of the block of signals;
(F) a divider (39) for dividing the output signal of the first circuit for non-linear treatment by the output signal of said switch, said divider being intended to supply said normalized signals.

2. A device as claimed in Claim 1, characterized in that said first, second and third circuits for non-linear treatment (31, 37a, 37b) and the multiplier (36) are controlled by memories which receive the row and/or the family of the block of signals concerned.
